# EUROPEAN PATENT SPECIFICATION

(11) **EP 4 330 836 B1**
(45) Date of publication and mention of the grant of the patent: **08.10.2025**
(21) Application number: 22720987.1
(22) Date of filing: 05.04.2022
(51) Int. Cl.: G06Q 20/38, G07F 7/08, G07F 7/10, G06F 21/31, G06Q 20/32, G06Q 20/40, H04L 9/40, G06F 21/62, H04W 12/06, H04W 12/08, G06Q 20/34

(54) **METHOD FOR CONTROLLING A SMART CARD**
VERFAHREN ZUR STEUERUNG EINER CHIPKARTE
PROCÉDÉ DE COMMANDE D'UNE CARTE INTELLIGENTE

(30) Priority: 29.04.2021 EP 21305554
(43) Date of publication of application: 06.03.2024
(73) Proprietor: THALES DIS FRANCE SAS, 92190 Meudon (FR)
(72) Inventor: LEROY, Pascal, 92190 Meudon (FR); ZEAMARI, Ali, 92190 Meudon (FR)
(74) Representative: Grevin, Emmanuel
(86) International application number: PCT/EP2022/059026
(87) International publication number: WO 2022/228837

(56) References cited:
- US-A1- 2005 161 503
- US-A1- 2016 267 486

## Description

### (Field of the invention)

The present invention relates to methods for controlling a smart card. It relates particularly to methods for controlling contactless smart cards.

### (Background of the invention)

When performing a transaction with a terminal like a Point-Of-Sale (POS) terminal, a smart card generally uses a data (like a PIN code) provided by the cardholder through a user input interface (like a keyboard) of the terminal. The smart card retrieves the typed data from the terminal and uses it for authenticating the user or for verifying user consent for the operation of a particular function provided by the smart card. Although terminals are supposed to be secured, a malevolent person may have introduced a malware into the terminal to log the typed password/PIN code unbeknownst to the user.

The document US2005/0161503 A1 describes a process for managing a transaction involving a chip card and a terminal.

The document US2016/0267486 A1 describes a system comprising a smart jacket transmitting card data to a phone.

There is a need to enhance security of the user authentication or user consent verification.

### (Summary of the Invention)

The invention aims at solving the above mentioned technical problem.

An object of the present invention is a method for controlling a smart card allocated to a user. The method comprises a step of establishing a wireless communication channel between the smart card and a portable apparatus. The method comprises the steps of:
- Determining by the smart card that control of authentication of said user depends on the portable apparatus and requesting accordingly a permission data reflecting a specific right allocated to a function provided by the smart card,
- Capturing an input data from the user through an interface embedded in the portable apparatus,
- Performing, by the portable apparatus, an authentication of the user based on said input data,
- Depending on a result of said authentication, identifying said permission data by the portable apparatus and sending the permission data to the smart card, and
- Activating or deactivating said specific right in the smart card according to the permission data.

Advantageously, the specific right may be a permission to use said function.

Advantageously, the specific right may be an authorization to use or activate a parameter of said function.

Advantageously, said function may be an exchange of data through a communication channel established with a terminal distinct from the portable apparatus.

Advantageously, said function may be the provisioning of a credential authorizing a transaction involving a terminal distinct from the portable apparatus.

Advantageously, the permission data may be identified based on a parameter of said transaction.

Advantageously, the terminal may be a Point-Of-Sale terminal, the transaction may be a payment for an amount higher than a preset threshold and the specific right may be an authorization given to the smart card to provide its agreement for the transaction to the terminal.

Advantageously, said input data may comprise at least one of the following: a PIN code, a password, a passphrase, a One-Time-Password, a biometric data and a drawn pattern. The input data may comprise behavior data like the gait, movements, rhythm of the individual doing actions.

Another object of the present invention is a smart card allocated to a user. The smart card is able to establish a wireless communication channel with a portable apparatus. The smart card is configured to determine that control of authentication of the user depends on the portable apparatus and to request accordingly a permission data reflecting a specific right allocated to a function provided by the smart card. The smart card is configured to activate or deactivate the specific right according to the permission data received from the portable apparatus.

Another object of the present invention is a system comprising a smart card as described above and a portable apparatus embedding an interface able to capture an input data from a user. The portable apparatus is configured to perform an authentication of the user based on the input data and, depending on a result of the authentication, to identify a permission data reflecting a specific right allocated to a function provided by the smart card and to send the permission data to the smart card.

Advantageously, the function may ben exchange of data through a communication channel established with a terminal distinct from the portable apparatus.

Advantageously, the function may be the provisioning of a credential authorizing a transaction involving a terminal which is distinct from the portable apparatus.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary architecture of a system according to an example of the invention,
- Figure 2 shows an exemplary flow diagram for controlling the behavior of a smart card coupled to an apparatus according to an example of the invention, and
- Figure 3 shows a diagram of architecture of a system comprising a portable apparatus and a smart card according to an example of the invention.

### (Detailed description of the preferred embodiments)

Smart cards are portable small devices comprising a memory, a microprocessor and an operating system for computing treatments. They may comprise services applications like payment applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of portable apparatus intended to be coupled to a smart card and able to get data from the cardholder. The portable apparatus may be a smartphone, a tablet, a Personal Digital Assistant (PDA) or a wearable device like a watch, glasses, a key ring or a bracelet for instance.

The invention may apply to any type of smart cards intended to participate to a transaction with a terminal. For example the smartcard may be a banking smart card, a transport card, an access badge, a loyalty card or an identity document.

The invention is well-suited for smartcards which have very limited user input interface or are devoid of user input interface.

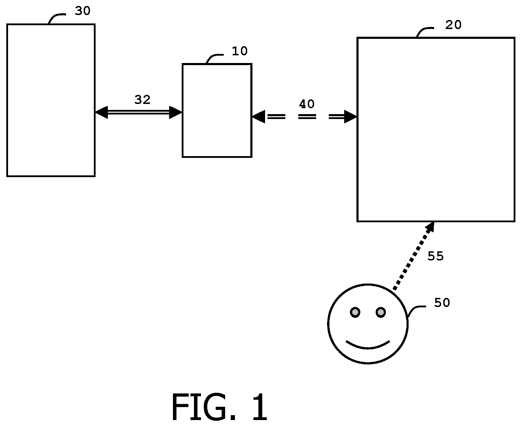

Figure 1 depicts an exemplary architecture of a system according to an example of the invention.

In this example, the system comprises a smart card 10 and a portable apparatus 20. The smart card 10 may be a payment card. The smart card is coupled to a terminal 30 which may be a hardware device intended to power the card, to establish a communication session 32 with the smart card and to send at least one command to the smart card.

The terminal 30 embeds a card reader able to establish a communication session with the smart card 10 in contact or contactless mode.

The terminal 30 and the card 10 may communicate using NFC (Near Field Communication) technology which is based on the exchanging of data via a modulated magnetic field. A NFC reader has an antenna which is able to modulate the magnetic field and to provide energy to NFC card. A contactless card and a contactless apparatus (comprising a NFC reader) may communicate thanks to an inductive coupling in a field frequency equal to 13.56 MHz. In particular, the ISO14443, ISO/IEC21481 and ISO18092 standards provide modulation technologies and communication protocols which may be used in NFC domain.

The terminal 30 and the card 10 may communicate using ISO/IEC-7816 protocols (like T=0 or T=1 for instance), through the SWP (Single Wire Protocol) or any relevant protocol in contact mode.

The portable apparatus embeds a user input interface allowing to capture a data 55 provided by a user 50 (I.e. an individual). For example, the user input interface may include a keyboard, a microphone, a motion sensor, a camera or a biometric sensor. Preferably, the portable apparatus is a smartphone. In some embodiments, the portable apparatus 20 may be a wearable device like a watch, a key fob or a bracelet.

The portable apparatus 20 and the smart card 10 are configured to establish a wireless communication channel 40 and to communicate using a contactless protocol relying on NFC, Ultra-wideband (UWB) or Bluetooth Low Energy^{®} (BLE) technology for instance.

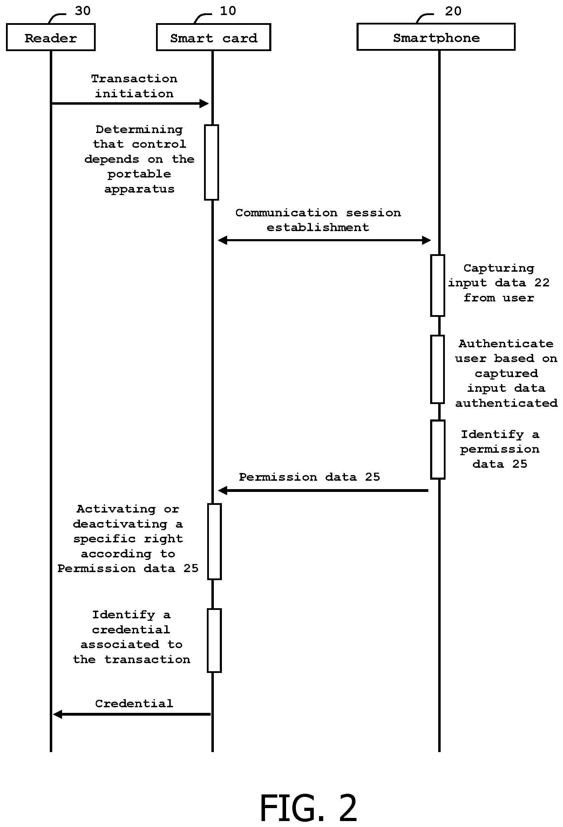

Figure 2 depicts an exemplary flow diagram for controlling the behavior of a card coupled to a portable apparatus according to an example of the invention.

In this example, the smart card 10 is a payment card and the portable apparatus 20 is a smartphone.

The cardholder may want to perform a transaction at a Point-Of-Sale. A communication session is established between the POS terminal 30 and the payment card 10 in a conventional way.

The smart card 10 may embed an internal battery or may retrieve power from the connected POS terminal 30.

Depending on the nature of the transaction desired by the user, the POS terminal sends to the smart card a command which aims at getting the authorization to continue/complete the transaction.

On receipt of the command, the smart cards 10 determines that control of authentication of the user must be performed by the portable apparatus 20. The card may use one or more parameters of the desired transaction to determine that control of authentication of the user depends on the portable apparatus 20. For example, if the transaction is a payment for an amount higher than a preset threshold, the smart card may consider that user authentication should be managed by the portable apparatus 20. For instance the card may be customized to delegate user authentication for all withdrawal/payment transactions whose amount is higher than 60 Euros.

In some embodiments, the smart card may use its own internal pre-recorded parameters to determine that control of authentication of the user depends on the portable apparatus 20. For instance the card may be customized to delegate user authentication to the portable apparatus for all transactions in which the card is involved.

Then a wireless communication channel is established between the smart card and the portable apparatus 20. Then the smart cards requests a permission data reflecting a specific right allocated to a function provided by the smart card. For instance, if the transaction is a payment transaction, the function may be the feature of providing a data reflecting consent of the user or authentication of the user.

In some embodiments, the request of a permission data may be implicit and the portable apparatus may start capture of action(s) of the user as soon as the wireless communication channel is established.

In some embodiments, the smart card may send a requesting message to the portable apparatus which starts capture of action(s) of the user upon receipt of the requesting message.

The portable apparatus captures an input data 22 originated from the user through a user input interface 26 embedded in the portable apparatus. For instance, the user may type their PIN code or passphrase on a digital keyboard of a smartphone.

Then a controlling application embedded in the portable apparatus may try to authenticate the user by checking the validity of the captured input data 22. Such a checking operation may be performed using one of the algorithms well known in authentication domain.

Then the controlling application may identify a permission data 25 according to the result of the checking operation. For example, if the user has been successfully authenticated, the permission data 25 may contain a value that will be interpreted by the smart card 10 as an agreement to complete the transaction or, otherwise, a refusal to continue the transaction.

The portable apparatus may send the permission data 25 to the smart card that in turn activates or deactivate a specific right according to the value of the received permission data 25. For example, if the permission data 25 reflects an agreement to complete the transaction, the card 10 may provide the terminal 30 with a message containing the agreement of the smart card to complete the transaction. Otherwise, the smart card may transmit to the terminal a message indicating that the smart card refuses to continue the transaction.

In some embodiments, the smart card may identify a credential associated to the transaction and send it to the terminal. For instance, the smart card may compute a cryptographic data which is forwarded by the terminal to a remote bank server that may check the validity of the cryptographic data generated by the smart card.

In some embodiments, the portable apparatus may refrain from sending permission data to the smart card if authentication of the user failed. In such embodiments, the card 10 may infer that the user authentication failed (or did not take place) if it does not receive permission data after a predetermined time.

When the terminal is a Point-Of-Sale terminal, the transaction may be a payment for an amount higher than a preset threshold (like 50 Euros for instance) and the specific right may be an authorization given to the smart card to provide its own agreement for the transaction to the terminal.

In some embodiments, the permission data 25 may be identified based on a parameter of the transaction. In other words, the smart card may send to the portable apparatus a set of one or more parameters associated to the transaction and the portable apparatus may take the received transaction parameter(s) into account when assessing the genuineness of the user. For example, if the user is authenticated by a fingerprint sensor embedded in the portable apparatus 20 and if one received parameter is the amount of the payment transaction, the portable apparatus may adapt the confidence level (% of match) of the biometric matching algorithm required to pass the verification. In another example, if the card is an access badge and if one received parameter is the security level of a room that the cardholder wants to access, the portable apparatus may select an appropriate number of authentication factor. For instance, to access top security level room, the user will have to enter both a valid password (or a passphrase) and a valid drawn pattern on the portable apparatus while for accessing a low level security area, the user will have to enter either a valid PIN code or a valid drawn pattern on the portable apparatus.

In some embodiments, the smart card may embed a biometric sensor like a fingerprint sensor. Upon receipt of a permission data reflecting a successful user authentication at portable apparatus side, the smart card may perform an additional control by checking a further biometric data of the user captured through its own biometric sensor. The smart card may generate a message based on the combination of the permission data and the additional checking performed by the card and send this message to the terminal 30.

The received permission data reflects a specific right allocated to a function which may be provided by the smart card.

In some embodiments, the specific right may be a permission to use or execute a corresponding function. For example, the card may be authorized to perform an enrollment of a new biometric reference only if a successful user authentication has been performed by the portable apparatus 20. In another example, the card may be authorized to perform the computation of a cryptographic value which is required to validate a payment transaction or cash withdrawal only if a successful user authentication has been performed by the portable apparatus 20.

In some embodiments, the specific right may be an authorization to use or activate a parameter of a corresponding function. For example, the specific right may be the activation or deactivation of a NFC interface in the card. In addition, the NFC interface may be activated with a restriction of use limited to a particular type of transaction.

In some embodiments, the function of the smart card may be an exchange of data through the communication channel 32 established with the terminal 30.

In some embodiments, there is no communication channel established between a terminal and the smart card. In other words, the smart card may have no interaction with the terminal. For example, provided that the card embeds its own display, the card may display the amount of its internal purse (or the value of a loyalty counter) only if the cardholder has been successfully authenticated by the portable apparatus. In another example, the change of the internal state of the card (set of available/activated features, applications or parameters) may be updated according to the result of the authentication of the user by the portable apparatus.

Thanks to some embodiments of the invention, the card may delegate the user authentication to a coupled portable apparatus and takes into account the result of the user authentication to adapt its feature / behavior.

In some embodiments, the communication session established between the card 10 and the portable apparatus 20 may be secured based on keys stored in the smart card and the apparatus. For instance, messages exchanged through the communication session may be enciphered using cryptographic algorithms well known in the domain of smart cards. The exchanged data may be enciphered and/or signed with a symmetric algorithm or using a public/private key pair.

In some embodiments, the portable apparatus may connect a remote server to perform a check allowing to authorize the card to carry out a transaction. For instance, the portable apparatus may be a smart phone that communicates with a banking server through a combination of a Telecom network and a wired network in order to get a right to authorize the card to perform a payment for a particular amount. The portable apparatus may act as a gateway between the card and the cloud.

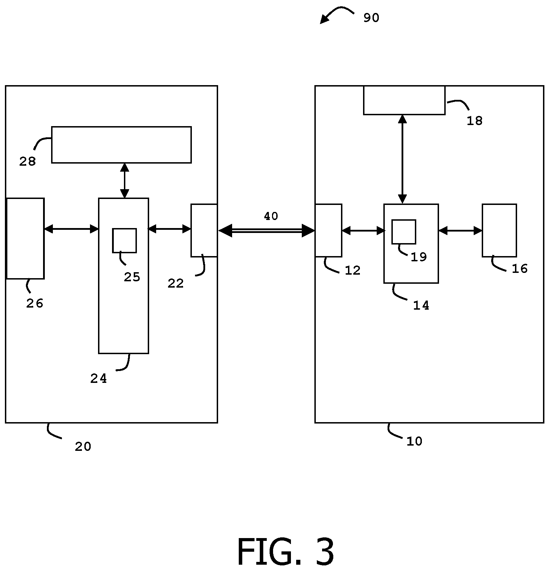

Figure 3 depicts a diagram of architecture of a system 90 comprising an apparatus 20 and a smart card according to an example of the invention.

In this example, the smart card 10 is an access badge allocated to a user and containing credentials allowing to get access to an area having a specific security level.

The smart card 10 comprises a secure chip 14 (also called secure element), a battery 16, a physical communication interface 12 designed to communicate with the portable apparatus 20 in contactless mode, and a physical communication interface 18 designed to communicate with a terminal in contact or contactless mode.

In some embodiments, the smart card 10 may be devoid of battery and be designed to get power through the physical communication interface 18.

In some embodiments, the smart card 10 may comprise a biometric sensor and/or a display.

The smart card 10 may store a key 19 intended to be used to secure the data exchanged with the portable apparatus 20. The key 19 may be stored in a non-volatile memory embedded in the secure element 14.

The secure element 14 may be a conventional smart card chip with additional features. The secure element 14 may comprise a processor and a set of software and/or hardware instructions which are executed by the processor to perform the functions of the secure element. The secure element 14 may comprise a specific application which is designed to delegate user authentication to the coupled portable apparatus.

In some embodiments, the smart card 10 may be designed to behave as a conventional card as long as no communications session has been established with a nearby portable apparatus. In other words, if the smart cannot establish a communication with the portable apparatus, the smart card may be designed to continue to function in the conventional way as if it does not implement the invention.

The portable apparatus 20 may be a wearable device comprising a card controller unit 24 including a chip and software instructions. The apparatus 20 may comprise a non-volatile memory, a physical user input interface 26 and a physical communication interface 22 configured to exchange data with the smart card 10.

The physical user input interface 26 may include a keyboard, one or more buttons, a biometric sensor, a camera and/or a microphone.

The apparatus 20 may comprise a physical user output interface 28 that may include a display, a speaker, one or several LEDs and/or a haptic feedback device.

The apparatus 20 may store a key 25 in the card controller unit 24 or in the non-volatile memory and may be adapted to decipher (and/or to check a signature of) the data received from the smart card 10 using the key **25.**

In some embodiments, the portable apparatus 20 is said to be paired to the smart card 10 when it stores a secret value or a key allowing to securely access the content of the encipher/signed data sent by the smart card 10.

The portable apparatus 20 is able to establish a contactless communication channel with the smart card through its physical communication interface 22. Preferably the portable apparatus 20 and the smart card 10 are configured to exchange data through BLE.

The portable apparatus 20 may be a phone, a wearable device, a tablet PC or a Personal Digital Assistant for instance.

The portable apparatus 20 may be configured to receive from the smart card an implicit or explicit request of user authentication.

The portable apparatus 20 may be configured to select a policy either according to security data pre-registered into the portable or by using a set of parameters received from the smart card.

The portable apparatus 20 may be configured to capture data coming from a user and to authenticate the genuineness of the user according to the selected policy and the captured data.

The portable apparatus 20 may be configured to identify a permission data depending on the result of the user authentication.

The invention is not limited to the described embodiments or examples. In particular, the described examples and embodiments may be combined.

The invention is not limited to Banking or access smart cards and applies to any smart cards whose behavior depends on the authentication of the cardholder.

Although examples of the invention have been mainly provided in the banking domain, the invention also applies to other domains. For example, the smart card may provide access to a virtual area, a physical area like a building, a transit network or a transport network.

## Claims

1. A method for controlling a smart card (10) allocated to a user (50) comprising the step of establishing a wireless communication channel (40) between the smart card and a portable apparatus (20), **characterized in that** the method comprises the steps:
- Starting a transaction between said smart card and a terminal (30) distinct from the portable apparatus, said transaction having at least one applicative parameter sent to the smart card by the terminal and requesting authentication of said user,
- sending by the terminal to the smart card a command which aims at getting the authorization to continue the transaction,
- on receipt of said command, determining by the smart card that control of authentication of said user depends on the portable apparatus and requesting accordingly a permission data (25) reflecting a specific right allocated to a function provided by the smart card, said determining being performed by using said at least applicative parameter of the transaction,
- Capturing an input data (22) from the user through an interface (26) embedded in the portable apparatus,
- Performing, by the portable apparatus, an authentication of the user based on said input data,
- Depending on a result of said authentication, identifying said permission data by the portable apparatus and sending the permission data to the smart card,
- Activating or deactivating said specific right in the smart card according to the permission data.

2. The method according to claim 1, wherein the specific right is a permission to use said function.

3. The method according to claim 1, wherein the specific right is an authorization to use or activate a parameter of said function.

4. The method according to claim 1, wherein said function is an exchange of data through a communication channel (32) established between the smart card and the terminal (30).

5. The method according to claim 1, wherein said function is a provisioning of a credential authorizing said transaction.

6. The method according to claim 5, wherein said terminal is a Point-Of-Sale terminal, wherein the transaction is a payment for an amount higher than a preset threshold and wherein the specific right is an authorization given to the smart card to provide its agreement for the transaction to the terminal.

7. The method according to claim **1,** wherein either said at least applicative parameter is an amount and said transaction is a payment transaction, or said at least applicative parameter is an area security level and said transaction is an access request transaction.

8. The method according to claim 1, wherein said input data comprises at least one of the following: a PIN code, a password, a passphrase, a One-Time-Password, a biometric data, a drawn pattern or behavior data like a gait, movements or rhythm of the user.

9. A system (90) comprising a smart card (10) and a portable apparatus (20) embedding an interface able to capture an input data, said smart card being allocated to a user (50) and able to establish a wireless communication channel (40) with the portable apparatus,
**characterized in that** the smart card is configured to start a transaction with a terminal (30) distinct from the portable apparatus, said transaction requesting authentication of said user and having at least one applicative parameter sent to the smart card by the portable apparatus,
**in that** the smart card is configured to receive from the terminal a command which aims at getting the authorization to continue the transaction,
**in that**, on receipt of said command, the smart card is configured to determine, by using said at least applicative parameter of the transaction, that control of authentication of said user depends on the portable apparatus and to request accordingly a permission data (25) reflecting a specific right allocated to a function provided by the smart card,
**in that** the smart card is configured to activate or deactivate said specific right according to the permission data received from the portable apparatus, and
**in that** the portable apparatus is configured to perform an authentication of the user based on said input data and, depending on a result of said authentication, to identify a permission data (25) reflecting a specific right allocated to a function provided by the smart card and to send the permission data to the smart card.

10. The system according to claim **9,** wherein the specific right is a permission to use said function.

11. The system according to claim **9,** wherein the specific right is an authorization to use or activate a parameter of said function.

12. The system according to claim **9,** wherein said function is an exchange of data through a communication channel (32) established between the smart card and the terminal (30).

13. The system according to claim **9,** wherein said function is a provisioning of a credential authorizing said transaction.

14. The system according to claim **9,** wherein said terminal is a Point-Of-Sale terminal, wherein the transaction is a payment for an amount higher than a preset threshold and wherein the specific right is an authorization given to the smart card to provide the terminal with its own agreement for the transaction.

15. The system according to claim 9, wherein either said at least applicative parameter is an amount and the transaction is a payment transaction, or said at least applicative parameter is an area security level and the transaction is an access request transaction aiming at getting access to said area.

## Patentansprüche

1. Verfahren zum Steuern einer Smartcard (10), die einem Benutzer (50) zugewiesenen ist, umfassend den Schritt des Einrichtens eines drahtlosen Kommunikationskanals (40) zwischen der Smartcard und einer tragbaren Einrichtung (20), **dadurch gekennzeichnet, dass** das Verfahren die folgenden Schritte umfasst:
- Starten einer Transaktion zwischen der Smartcard und einem Terminal (30), das sich von der tragbaren Einrichtung unterscheidet, wobei die Transaktion mindestens einen applikativen Parameter aufweist, der von dem Terminal an die Smartcard gesendet wird und die Authentifizierung des Benutzers anfordert,
- Senden eines Befehls durch das Terminal an die Smartcard, der darauf abzielt, die Autorisierung zum Fortsetzen der Transaktion zu erhalten,
- beim Empfang des Befehls, Bestimmen durch die Smartcard, dass die Kontrolle der Authentifizierung des Benutzers von der tragbaren Einrichtung abhängt, und dementsprechend Anfordern von Berechtigungsdaten (25), die ein spezifisches Recht widerspiegeln, das einer von der Smartcard bereitgestellten Funktion zugewiesen ist, wobei das Bestimmen unter Verwendung des mindestens applikativen Parameters der Transaktion durchgeführt wird,
- Erfassen von Eingabedaten (22) von dem Benutzer über eine in die tragbare Einrichtung eingebettete Schnittstelle (26),
- Durchführen einer Authentifizierung des Benutzers durch die tragbare Einrichtung basierend auf den Eingabedaten,
- abhängig von einem Ergebnis der Authentifizierung, Identifizieren der Berechtigungsdaten durch die tragbare Einrichtung und Senden der Berechtigungsdaten an die Smartcard,
- Aktivieren oder Deaktivieren des spezifischen Rechts in der Smartcard gemäß den Berechtigungsdaten.

2. Verfahren nach Anspruch 1, wobei das spezifische Recht eine Berechtigung zum Verwenden der Funktion ist.

3. Verfahren nach Anspruch 1, wobei das spezifische Recht eine Autorisierung zum Verwenden oder Aktivieren eines Parameters der Funktion ist.

4. Verfahren nach Anspruch 1, wobei die Funktion ein Datenaustausch über einen zwischen der Smartcard und dem Terminal (30) eingerichteten Kommunikationskanal (32) ist.

5. Verfahren nach Anspruch 1, wobei die Funktion ein Bereitstellen eines Berechtigungsnachweises zum Autorisieren der Transaktion ist.

6. Verfahren nach Anspruch 5, wobei das Terminal ein Verkaufsstellen-Terminal ist, wobei die Transaktion eine Zahlung über einen Betrag ist, der oberhalb eines voreingestellten Schwellenwerts liegt, und wobei das spezifische Recht eine der Smartcard erteilte Autorisierung ist, um dem Terminal ihre Zustimmung zu der Transaktion bereitzustellen.

7. Verfahren nach Anspruch 1, wobei entweder der mindestens applikative Parameter ein Betrag ist und die Transaktion eine Zahlungstransaktion ist, oder der mindestens applikative Parameter eine Bereichssicherheitsstufe ist und die Transaktion eine Zugangsanforderungstransaktion ist.

8. Verfahren nach Anspruch 1, wobei die Eingabedaten mindestens eines der Folgenden umfassen: einen PIN-Code, ein Passwort, eine Passphrase, ein Einmalpasswort, biometrische Daten, ein gezeichnetes Muster oder Verhaltensdaten wie Gang, Bewegungen oder Rhythmus des Benutzers.

9. System (90), umfassend eine Smartcard (10) und eine tragbare Einrichtung (20), in die eine Schnittstelle eingebettet ist, die Eingabedaten erfassen kann, wobei die Smartcard einem Benutzer (50) zugewiesen ist und einen drahtlosen Kommunikationskanal (40) mit der tragbaren Einrichtung einrichten kann,
**dadurch gekennzeichnet, dass** die Smartcard konfiguriert ist, um eine Transaktion mit einem Terminal (30) zu starten, das sich von der tragbaren Einrichtung unterscheidet, wobei die Transaktion eine Authentifizierung des Benutzers anfordert und mindestens einen applikativen Parameter aufweist, der von der tragbaren Einrichtung an die Smartcard gesendet wird,
dass die Smartcard konfiguriert ist, um von dem Terminal einen Befehl zu empfangen, der darauf abzielt, die Autorisierung zum Fortsetzen der Transaktion zu erhalten,
dass die Smartcard konfiguriert ist, um beim Empfang des Befehls unter Verwendung des mindestens applikativen Parameters der Transaktion zu bestimmen, dass die Kontrolle der Authentifizierung des Benutzers von der tragbaren Einrichtung abhängt, und dementsprechend Berechtigungsdaten (25) anfordert, die ein spezifisches Recht widerspiegeln, das einer von der Smartcard bereitgestellten Funktion zugewiesen ist,
dass die Smartcard konfiguriert ist, um das spezifische Recht gemäß den von der tragbaren Einrichtung empfangenen Berechtigungsdaten zu aktivieren oder zu deaktivieren, und
dass die tragbare Einrichtung konfiguriert ist, um eine Authentifizierung des Benutzers basierend auf den Eingabedaten durchzuführen und, abhängig von einem Ergebnis der Authentifizierung, Berechtigungsdaten (25) zu identifizieren, die ein spezifisches Recht widerspiegeln, das einer von der Smartcard bereitgestellten Funktion zugewiesen ist, und die Berechtigungsdaten an die Smartcard zu senden.

10. System nach Anspruch 9, wobei das spezifische Recht eine Erlaubnis zum Verwenden der Funktion ist.

11. System nach Anspruch 9, wobei das spezifische Recht eine Autorisierung zum Verwenden oder Aktivieren eines Parameters der Funktion ist.

12. System nach Anspruch 9, wobei die Funktion ein Datenaustausch über einen zwischen der Smartcard und dem Terminal (30) eingerichteten Kommunikationskanal (32) ist.

13. System nach Anspruch 9, wobei die Funktion das Bereitstellen eines Berechtigungsnachweises zum Autorisieren der Funktion ist.

14. System nach Anspruch 9, wobei das Terminal ein Verkaufsstellen-Terminal ist, wobei die Transaktion eine Zahlung über einen Betrag ist, der oberhalb eines voreingestellten Schwellenwerts liegt, und wobei das spezifische Recht eine der Smartcard erteilte Autorisierung ist, um dem Terminal eine eigene Zustimmung zu der Transaktion bereitzustellen.

15. System nach Anspruch 9, wobei entweder der mindestens applikative Parameter ein Betrag ist und die Transaktion eine Zahlungstransaktion ist, oder der mindestens applikative Parameter eine Bereichssicherheitsstufe ist und die Transaktion eine Zugangsanforderungstransaktion ist, die darauf abzielt, Zugang zu dem Bereich zu erhalten.

## Revendications

1. Procédé permettant de commander une carte à puce (10) allouée à un utilisateur (50) comprenant l'étape d'établissement d'un canal de communication sans fil (40) entre la carte à puce et un appareil portable (20), **caractérisé en ce que** le procédé comprend les étapes :
- Démarrage d'une transaction entre ladite carte à puce et un terminal (30) distinct de l'appareil portable, ladite transaction ayant au moins un paramètre applicatif envoyé à la carte à puce par le terminal et demandant l'authentification dudit utilisateur,
- envoi par le terminal à la carte à puce d'une instruction qui vise à obtenir l'autorisation de continuer la transaction,
- à la réception de ladite instruction, détermination par la carte à puce qu'une commande d'authentification dudit utilisateur dépend de l'appareil portable et demande en conséquence de données d'autorisation (25) reflétant un droit spécifique alloué à une fonction fournie par la carte à puce, ladite détermination étant mise en œuvre par l'utilisation dudit au moins un paramètre applicatif de la transaction,
- Capture de données d'entrée (22) en provenance de l'utilisateur par le biais d'une interface (26) intégrée dans l'appareil portable,
- Mise en œuvre, par l'appareil portable, d'une authentification de l'utilisateur en fonction desdites données d'entrée,
- En dépendance d'un résultat de ladite authentification, identification desdites données d'autorisation par l'appareil portable et envoi des données d'autorisation à la carte à puce,
- Activation ou désactivation dudit droit spécifique dans la carte à puce selon les données d'autorisation.

2. Procédé selon la revendication 1, dans lequel le droit spécifique est une autorisation pour utiliser ladite fonction.

3. Procédé selon la revendication 1, dans lequel le droit spécifique est une autorisation pour utiliser ou activer un paramètre de ladite fonction.

4. Procédé selon la revendication 1, dans lequel ladite fonction est un échange de données par le biais d'un canal de communication (32) établi entre la carte à puce et le terminal (30).

5. Procédé selon la revendication 1, dans lequel ladite fonction est un provisionnement d'un justificatif d'identité autorisant ladite transaction.

6. Procédé selon la revendication 5, dans lequel ledit terminal est un terminal de point de vente, dans lequel la transaction est un paiement pour un montant supérieur à un seuil prédéfini et dans lequel le droit spécifique est une autorisation donnée à la carte à puce pour fournir son accord pour la transaction au terminal.

7. Procédé selon la revendication 1, dans lequel soit ledit au moins un paramètre applicatif est un montant et ladite transaction est une transaction de paiement, soit ledit au moins un paramètre applicatif est un niveau de sécurité de zone et ladite transaction est une transaction de demande d'accès.

8. Procédé selon la revendication 1, dans lequel lesdites données d'entrée comprennent au moins l'un de ce qui suit : un code PIN, un mot de passe, une phrase secrète, un mot de passe à usage unique, des données biométriques, un motif dessiné ou des données de comportement comme une démarche, des mouvements ou un rythme de l'utilisateur.

9. Système (90) comprenant une carte à puce (10) et un appareil portable (20) intégrant une interface apte à capturer des données d'entrée, ladite carte à puce étant allouée à un utilisateur (50) et apte à établir un canal de communication sans fil (40) avec l'appareil portable,
**caractérisé en ce que** la carte à puce est configurée pour démarrer une transaction avec un terminal (30) distinct de l'appareil portable, ladite transaction demandant une authentification dudit utilisateur et ayant au moins un paramètre applicatif envoyé à la carte à puce par l'appareil portable,
**en ce que** la carte à puce est configurée pour recevoir en provenance du terminal une instruction qui vise à obtenir l'autorisation de continuer la transaction,
**en ce que**, à la réception de ladite instruction, la carte à puce est configurée pour déterminer, en utilisant ledit au moins un paramètre applicatif de la transaction, qu'une commande d'authentification dudit utilisateur dépend de l'appareil portable et pour demander en conséquence des données d'autorisation (25) reflétant un droit spécifique alloué à une fonction fournie par la carte à puce,
**en ce que** la carte à puce est configurée pour activer ou désactiver ledit droit spécifique selon les données d'autorisation reçues en provenance de l'appareil portable, et
**en ce que** l'appareil portable est configuré pour mettre en œuvre une authentification de l'utilisateur en fonction desdites données d'entrée et, en dépendance d'un résultat de ladite authentification, pour identifier des données d'autorisation (25) reflétant un droit spécifique alloué à une fonction fournie par la carte à puce et pour envoyer les données d'autorisation à la carte à puce.

10. Système selon la revendication 9, dans lequel le droit spécifique est une autorisation pour utiliser ladite fonction.

11. Système selon la revendication 9, dans lequel le droit spécifique est une autorisation pour utiliser ou activer un paramètre de ladite fonction.

12. Système selon la revendication 9, dans lequel ladite fonction est un échange de données par le biais d'un canal de communication (32) établi entre la carte à puce et le terminal (30).

13. Système selon la revendication 9, dans lequel ladite fonction est un provisionnement d'un justificatif d'identité autorisant ladite transaction.

14. Système selon la revendication 9, dans lequel ledit terminal est un terminal de point de vente, dans lequel la transaction est un paiement pour un montant supérieur à un seuil prédéfini et dans lequel le droit spécifique est une autorisation donnée à la carte à puce pour fournir au terminal son propre accord pour la transaction.

15. Système selon la revendication 9, dans lequel soit ledit au moins un paramètre applicatif est un montant et la transaction est une transaction de paiement, soit ledit au moins un paramètre applicatif est un niveau de sécurité de zone et la transaction est une transaction de demande d'accès visant à obtenir un accès à ladite zone.
